# NEUE EUROPÄISCHE PATENTSCHRIFT

(11) **EP 1 996 897 B2**
(45) Veröffentlichungstag und Bekanntmachung des Hinweises auf die Entscheidung über den Einspruch: **22.10.2014**
(45) Hinweis auf die Patenterteilung: 04.05.2011
(21) Anmeldenummer: 06708811.2
(22) Anmeldetag: 23.03.2006
(51) Int. Cl.: G01B 11/25, G01M 17/02

(54) **VERFAHREN ZUR RÄUMLICHEN VERMESSUNG SICH SCHNELL BEWEGENDER OBJEKTE**
METHOD FOR THE THREE-DIMENSIONAL MEASUREMENT OF FAST-MOVING OBJECTS
PROCÉDÉ DE MESURE SPATIALE D'OBJETS À DÉPLACEMENT RAPIDE

(43) Veröffentlichungstag der Anmeldung: 03.12.2008
(73) Patentinhaber: Mähner, Bernward, 82205 Gilching (DE)
(72) Erfinder: Mähner, Bernward, 82205 Gilching (DE)
(74) Vertreter: Flügel Preissner Kastel Schober
(86) Internationale Anmeldenummer: PCT/EP2006/061017
(87) Internationale Veröffentlichungsnummer: WO 2007/110107

(56) Entgegenhaltungen:
- WO-A-02/082070
- DE-A1- 10 019 386
- DE-A1- 10 344 922
- US-B1- 6 175 652
- US-B1- 6 611 617

## Beschreibung

Es ist bekannt, dass zur räumlichen Vermessung von Objekten Triangulationssysteme bestehend aus einem Punktlaser und einer Zeilenkamera verwendet werden. Solche Systeme werden beispielsweise bei Drehmaschinen eingesetzt, um bestimmte Maße oder Toleranzen bei der Herstellung von Rotationskörpern fortlaufend zu überprüfen. Prinzipbedingt wird dabei zu einem Zeitpunkt nur ein Punkt auf dem Objekt erfasst, jedoch können mehrere Systeme parallel eingesetzt werden. Die Zeilenrate handelsüblicher Zeilenkameras beträgt bis über 200 kHz, so dass auch bei schnell rotierenden Werkstücken der Abstand zwischen den einzelnen Messpunkten sehr klein ist. Nachteil des Verfahrens ist, dass selbst beim Einsatz mehrerer Systeme nur eine relativ geringe Anzahl von Messpunkten simultan erfasst wird.

Dieser Nachteil wird beim Lichtschnittverfahren überwunden. Durch Verwendung eines Linienlasers statt des Punktlasers und einer Flächenkamera statt der Zeilenkamera wird eine zusätzliche Dimension aufgespannt, so dass anstatt eines Messpunktes eine ganze Konturlinie erfasst wird. Im Gegensatz zu den Zeilenkameras ist die Bildfrequenz handelsüblicher Flächenkameras mit 25 bis 60 Vollbildern pro Sekunde vergleichsweise gering. Das zu vermessende Objekt muss demnach hinreichend langsam am Lichtschnittsystem vorbeibewegt werden, um einen brauchbaren räumlichen Abstand zwischen den Einzelmessungen nicht zu überschreiten.

Ein solches System ist beispielsweise in der Patentschrift DE 100 19 386 C2 beschrieben. In dem hier gezeigten Ausführungsbeispiel dreht sich das Objekt relativ langsam mit einer Frequenz von ca. 0,5 Hz um die Rotationsachse. Demgegenüber liegt die Bildfrequenz der verwendeten Videokamera bei ca. 25 Hz und ist damit ausreichend hoch. Um jedoch bei der Messung sich schnell bewegender Objekte, zum Beispiel eines sich mit einer Frequenz von ca. 10 Hz auf einem Rollenprüfstand drehenden Reifens, ein vergleichbares Frequenzverhältnis zu erzielen, muss eine deutlich schnellere Kamera mit einer Bildfrequenz von ca. 500 Hz verwendet werden. Für solche Hochgeschwindigkeitskameras müssen jedoch im Vergleich zu Standardkameras erhebliche Mehrkosten in Kauf genommen werden.

Beim Streifenprojektionsverfahren wird statt eines Linienlasers ein Streifenprojektor verwendet, so dass statt einer Konturlinie eine ganze Fläche topometrisch erfasst werden kann. Es ist hierzu eine ganze Reihe von unterschiedlichen Projektionsverfahren bekannt. Beispielsweise wird in der Patentschrift DE 38 43 396 C1 ein Verfahren beschrieben, bei dem zur Messung lediglich ein einzelnes Streifenmuster aufprojiziert werden muss.

Sowohl Lasertriangulationsverfahren als auch Streifenprojektionsverfahren unterliegen prinzipbedingt der Abschattungsproblematik, das heißt Punkte auf dem Prüfobjekt, die zwar von der Kamera erfasst, aber aufgrund der Topometrie des Objekts nicht gleichzeitig vom Laser- oder Projektionsstrahl beleuchtet werden, können nicht vermessen werden. Um diese Problematik zu minimieren, ist es aus der Offenlegungsschrift DE 197 41 730 A1 bekannt, das Objekt mit einer drehenden oder längsschwingenden Bewegung mehrfach am Sensor vorbeizuführen und es dabei gleichzeitig eine Längsschwingung beziehungsweise eine Drehbewegung ausführen zu lassen. Dadurch werden die einzelnen Oberflächenbereiche des Objektes für das Messsystem aus mehreren unterschiedlichen Beobachtungsrichtungen erfassbar und die Abschattungsproblematik hierdurch entschärft.

Aus technischen Anwendungen ist ferner eine stroboskopische Beleuchtung zur Beobachtung sich schnell bewegender oder schwingender Objekte bekannt. Die Blitzbeleuchtung friert das Bild des betrachteten Objektes für den Beobachter zu einer bestimmten Phasenlage innerhalb einer Bewegungsperiode des Objektes ein. Dies wird auch für messtechnische Zwecke ausgenutzt. Zur Überprüfung einer korrekten Zündeinstellung an einem Ottomotor wird beispielsweise eine Stroboskoplampe durch den Primärkreis der Zündung getriggert. Wird auf diese Weise die Motorschwungscheibe mit den Positionsmarkierungen der Kurbelwelle beleuchtet, so ist es für den Beobachter möglich, den Zündzeitpunkt bezüglich der Kurbelwellenstellung bei laufendem Motor zu überprüfen. Ein anderer Anwendungsfall für das Stroboskop ist die Analyse schwingender Objekte. Hier wird die Phasenlage des Stroboskopblitzes gegenüber der periodischen Objektbewegung kontinuierlich verschoben, womit die Schwingform des Objektes quasi in Zeitlupe beobachtet werden kann, da nun die Schwingung des Objektes für den Beobachter mit der Geschwindigkeit der Phasenlagenänderung sichtbar wird.

Um die Verformung eines Objektes bei periodischer, insbesondere sinusförmiger, Anregung mit einem Streifenprojektionsverfahren analysieren zu können, wird in der Patentschrift DE 198 41 365 C2 vorgeschlagen, die Belichtung der Kamera des Messsystems in fester Phasenlage bezüglich der Anregung der Schwingung und mit stroboskopisch kurzer Belichtungszeit auszulösen. Hierdurch wird ein phasenabhängiger Verformungszustand des sich dynamisch verformenden Objekts "eingefroren" und der quantitativen Auswertung zugänglich gemacht. Zur Erfassung eines quasistatischen Zustands des Objekts muss die Belichtungszeit aber in der Regel so kurz gewählt werden, dass das Kamerabild unterbelichtet ist. Um dieses Problem zu beseitigen, wird nun die Belichtung der Kamera in mehreren aufeinanderfolgenden Schwingungen bei gleicher Phasenlage ausgelöst. Hierdurch akkumuliert sich die auf dem Sensor der Kamera einfallende Lichtenergie und man erhält im Ergebnis ein gut ausgesteuertes Bild. Ein Verfahren zur Vermessung einer vorherbestimmten Ebene eines dreidimensionalen Objektes wird in der Patentschrift US 6,175,652 B1 vorgestellt. Dabei wird das zu beobachtende Objekt gedreht und eine Serie von Messungen vorgenommen. Jede dieser Messungen korrespondiert mit einer unterschiedlichen Orientierung des Objektes. Aus den so entstandenen Messungen entsteht ein räumliches Abbild des Objektes. Dieses wird ergänzt durch zuvor identifizierte charakteristische Punkte, welche bei mindestens einer Messung lokalisiert wurden. Eine Messung kann als eine Sequenz von Bildern betrachtet werden, wobei jedes einzelne Bild der Sequenz einen Bereich aufweist, welche sich mit einem Bereich des angrenzenden Bildes der Sequenz überlappt.

Ein Verfahren und ein Rundum-Scanner zur dreidimensionalen Erfassung eines Objekts, bei dem es sich insbesondere um einen Ohrabdruck handelt, ist aus DE 103 44 922 A1 bekannt. Um den Ohrabdruck in verhältnismäßig einfacher und kostengünstiger Weise mit der zur Herstellung einer Hörgeräte-Gehäuseschale erforderlichen Genauigkeit dreidimensional zu erfassen, wird mittels eines Projektors ein zweidimensionales Farbmuster mit bekannten Projektionsdaten auf die Oberfläche des Ohrabdrucks projiziert und das aufprojizierte Farbmuster anschließend mit einer CCD-Kamera aus einer von der Projektionsrichtung abweichenden Richtung aufgenommen. Durch Decodierung des Farbmusters an jedem Bildpunkt des Kamerabilds werden dann die zugehörigen dreidimensionalen Koordinaten der Objektoberfläche mittels Triangulation bestimmt. Für einen Rundum-Scan ist grundsätzlich nur eine einzige Drehung erforderlich. Lediglich zur Erhöhung der Genauigkeit des zu erzeugenden dreidimensionalen Models kann das Objekt mehrmals, beispielsweise fünfmal, gedreht werden. Die Drehung ist jedoch stets intermittierend.

Ausgehend von diesem Stand der Technik ist es **Aufgabe** der Erfindung, ein Verfahren anzugeben, welches die Vermessung sich schnell bewegender

Objekte mittels Lichtschnitt- oder Streifenprojektionsverfahren ermöglicht. Das Verfahren soll dabei die Verwendung von Spezialgeräten und die damit verbundenen hohen Kosten vermeiden und sich vielmehr auf den Einsatz handelsüblicher Komponenten beschränken.

Diese Aufgabe wird durch ein Verfahren mit den Merkmalen gemäß Anspruch 1 **gelöst**. Bevorzugte Ausgestaltungen des erfindungsgemäßen Verfahrens werden in den Ansprüchen 2 bis 16 definiert.

Erfindungsgemäß wird eine 3D-Messvorrichtung verwendet, die eine Projektionseinheit für eine oder mehrere Lichtschnittebenen und eine Flächenkamera umfasst. Die Projektionseinheit weist vorzugsweise einen Linienlaser oder einen Projektor zur Projektion von Streifenmustern auf. Die Flächenkamera ist vorzugsweise eine elektronische CCD- oder CMOS-Kamera.

Erfindungsgemäß wird das Objekt mehrmals, das heißt in mehreren Durchgängen, am Sensor vorbeibewegt. Eine solche Bewegung erfolgt durch eine Rotation des Objektes um eine Drehachse, welche ortsfest zur Messvorrichtung ist. Während eines Durchgangs werden erfindungsgemäß jeweils nur einzelne Teilbereiche der Objektoberfläche vom Sensor erfasst, das heißt eine im Verhältnis zur Gesamtzahl aller während einer vollständigen Messung erfassbaren Teilbereiche kleinere Anzahl von Teilbereichen. Es werden nun erfindungsgemäß mehrere Durchgänge derart ausgeführt, dass die in den einzelnen Durchgängen erfassten Teilbereiche der Objektoberfläche bezüglich des Objektes räumlich gegeneinander versetzt sind. Für einen neuen Durchgang werden hierzu jeweils die Objektpositionen für die Messdatenerfassung so vorher gewählt, dass Teilbereiche der Objektoberfläche erfasst werden, die in den vorhergehenden Durchgängen (noch) nicht erfasst worden sind. Diese Vorgehensweise wird so viele Durchgänge lang angewendet, bis die Oberfläche des Objektes mit der gewünschten Abtastdichte erfasst wurde. Die Erfassung der Objektoberfläche verteilt sich somit insgesamt auf mehrere Durchgänge, so dass auch mit einem relativ langsam arbeitenden Messsystem die Oberfläche des Objektes mit einer hohen Abtastdichte erfasst werden kann.

Ist die räumliche Zuordnung der von den erfassten Teilbereichen erhaltenen Konturdaten zueinander nicht erforderlich, das heißt es wird kein Oberflächenmodell des Objektes benötigt, so müssen die erhaltenen Konturdaten nicht in ein gemeinsames Objektkoordinatensystem transformiert werden. Führt das Objekt eine periodische Dreh- oder Schwingbewegung relativ zur Messvorrichtung aus, so wird in diesem Fall das erfindungsgemäße Verfahren vorteilhafterweise derart angewendet, dass die Kamera mit einer möglichst hohen Bildfrequenz oder Bildbelichtungsfrequenz betrieben wird. Die Bild- oder Bildbelichtungsfrequenz ist gegenüber der Bewegungsfrequenz des Objektes so verstimmt, dass die in den einzelnen Kamerabildern erfassten Objektpositionen, über die Bewegungsperioden des Objektes betrachtet, am Objekt entlang wandern. Nach einer hinreichenden Anzahl von Bewegungsperioden des Objektes ergibt sich hierdurch ohne weitere technische Maßnahmen eine flächendeckende Erfassung der Objektkontur.

Ein Anwendungsbeispiel für diese Ausführungsform der Erfindung ist zum Beispiel die Vermessung von Felgen oder Reifen, bei denen die Rundlaufeigenschaften geprüft werden sollen, also nur maximaler Höhen- und Seitenschlag von Interesse sind. In diesem Anwendungsfall genügt es, beispielsweise die aus allen erfassten Raumkoordinaten ermittelten Extremwerte in axialer und radialer Richtung zu berechnen.

In einem weiteren optionalen Verfahrensschritt werden hingegen die aus den erfassten Teilbereichen erhaltenen Konturdaten in ein gemeinsames Objektkoordinatensystem transformiert und daraus ein Oberflächenmodell des Objektes erstellt. Dieser Verfahrensschritt erfordert genaue Kenntnis über die Lage aller erfassten Teilbereiche untereinander und bezüglich des Objektes. Diese Information wird erfindungsgemäß dadurch erhalten, dass zu jeder Aufnahme von Messdaten durch die Kamera der Messvorrichtung die jeweilige Momentanposition des Objektes registriert wird.

Die Ermittlung der Momentanpositionen erfolgt vorteilhafterweise über einen Positionsgeber. In einer für alle Dreh- oder Schwingbewegungen des Objektes geeigneten Ausführungsform des Verfahrens kann es sich dabei beispielsweise bei Drehbewegungen um einen Drehwinkelgeber beziehungsweise bei translatorischen Bewegungen um ein Linear-Wegmesssystem handeln. In beiden Fällen wird dann die Belichtung der Kamera jeweils nach Erreichen eines bestimmten vom Positionsgeber ermittelten Wertes ausgelöst und der ermittelte Wert zur Weiterverarbeitung zusammen mit den Bilddaten abgelegt.

Beim Vorliegen einer periodischen Dreh- oder Schwingbewegung des Objektes wird das Verfahren vorteilhafterweise derart durchgeführt, dass die einzelnen Messpositionen über eine Zeitsteuerung gezielt ausgewählt werden. Zur exakten Zeitsteuerung wird vorteilhafterweise ein echtzeitfähiges Rechenwerk, zum Beispiel eine computergesteuerte Zählerkarte, verwendet, das zu vorherberechneten Zeitpunkten die Bildbelichtung der Kamera auslöst. Diese Ausführungsform hat den Vorteil, dass keine hochauflösenden Drehwinkel- oder Linear-Wegmesssysteme verwendet werden müssen. Es wird ein Signalgeber verwendet, der ein Referenzsignal zur Synchronisation der Zeitsteuerung mit der Objektbewegung erzeugt. Die zu einem bestimmten Belichtungszeitpunkt vorliegende räumliche Position des Objektes wird dann aus dem zeitlichen Abstand zwischen dem Erhalt eines Synchronisationsimpulses im Referenzsignal und dem Belichtungszeitpunkt ermittelt.

Um ein Wegdriften der über die Belichtungszeitpunkte ermittelten Objektpositionen von den tatsächlichen Objektpositionen zu verhindern, wird die Zeitsteuerung mit der Objektbewegung synchronisiert, zum Beispiel einmal pro Periode. Hierzu genügt ein Signalgeber, der pro Periode bei einer bestimmten Momentanposition des Objektes einen Synchronisationsimpuls sendet. Dieser Synchronisationsimpuls wird dann vorteilhafterweise dafür verwendet, um einerseits die aktuell vorhandene Periodenlänge der Objektbewegung zu messen und andererseits die Belichtungszeitpunkte stets auf den jeweils letzten vor oder ersten nach der betreffenden Bildbelichtung erhaltenen Synchronisationsimpuls zu beziehen.

In allen besprochenen Ausführungsvarianten ist die exakte Belichtung der Kamera des Messsystems von wesentlicher Bedeutung. Um die Kamera zu den beispielsweise vom Bildverarbeitungsrechner berechneten Zeitpunkten zu belichten, wird gemäß einer weiteren Ausführungsform der Erfindung ein über ein externes Signal auslösbarer mechanischer oder elektronischer Kameraverschluss verwendet. Es kann aber auch eine Kamera verwendet werden, deren Bildeinzug extern getriggert werden kann. In einer weiteren Ausführungsform wird hingegen die Lichtquelle des Messsystems, also zum Beispiel ein Linienlasermodul, durch einen mechanischen Verschluss oder eine elektronische Schaltvorrichtung stroboskopisch betätigt. Der zeitliche Abstand zwischen zwei aufeinanderfolgenden Belichtungen zur Erfassung der Teilbereiche der Objektoberfläche wird dabei vorteilhafterweise stets größer gewählt als die Bildperiode der Kamera, so dass eine Doppelbelichtung von Kamerabildern beziehungsweise -halbbildern ausgeschlossen ist. Hierdurch ist sichergestellt, dass sich bei der anschließenden, für Lichtschnitt- und Streifenprojektionssysteme obligatorischen Bildauswertung keine Schwierigkeiten ergeben. Da das Objekt in Bewegung erfasst wird, wird die Belichtungszeit hinreichend kurz gewählt und beträgt bei elektronischen Kameras nur einen Bruchteil der Bildperiode. Von Vorteil ist es, wenn auch bei externer Auslösung des Kameraverschlusses oder des Bildeinzugs die Belichtungszeit von der Kamera selbst gesteuert wird.

Die Bildfrequenz wird so gewählt, dass die Messpositionen, über die Bewegungsperioden des Objektes betrachtet, am Objekt entlang wandern. Hierzu genügt es, darauf zu achten, dass Bildfrequenz und Bewegungsfrequenz in einem Verhältnis zueinander stehen, das sicherstellt, dass sich identische Teilbereiche nicht wiederholen bevor eine hinreichende Anzahl an Durchgängen erreicht ist. Ein solches Verhältnis ist stets nicht ganzzählig.

Für jedes Kamerabild wird erfindungsgemäß der Zeitabstand zwischen der Bildaufnahme und dem Zeitpunkt, zu dem das Objekt eine bestimmte Referenzposition erreicht hat, gemessen. Hierzu wird wiederum vorteilhafterweise ein Referenzsignal erzeugt, das wenigstens einmal pro Periode einen Synchronisationsimpuls bei einer bestimmten Momentanposition des Objektes erzeugt. Durch die Messung der zwischen der Bildaufnahme und dem Erreichen der Referenzposition verstrichenen Zeit erhält man zu jeder Aufnahme jeweils einen Zeitwert, der beim Vorliegen einer periodischen Objektbewegung äquivalent zur Objektstellung ist. Mittels der gemessenen Zeitwerte werden dann die Konturdaten der in den einzelnen Aufnahmen erfassten Teilbereiche der Objektoberfläche in ein gemeinsames Objektkoordinatensystem transformiert. Ist der genaue Belichtungszeitpunkt der Kamera nicht erfassbar, da zum Beispiel die interne Shutterfunktion der Kamera nicht von außen abgreifbar ist, so kann bei der Messung der Zeitwerte beispielsweise das Zeitintervall zwischen dem Synchronisationsimpuls der Objektbewegung und dem vertikalen Synchronisationsimpuls im Videosignal für das betreffende Kamerabild verwendet werden. Dies führt insgesamt zu einem für alle ermittelten Zeitintervalle konstanten Offset. Zur Messung der Zeitintervalle kann vorteilhafterweise ein echtzeitfähiges Rechenwerk, zum Beispiel in Form einer Zählerkarte, verwendet werden, das beispielsweise im Rechnersystem der Bildverarbeitung integriert ist.

Im Folgenden werden Ausführungsbeispiele der Erfindung anhand von Zeichnungen erläutert. In den Zeichnungen zeigen:
- Fig. 1: ein System zur Durchführung des erfindungsgemäßen Verfahrens in einer ersten Ausführungsform;
- Fig. 2: das in Fig. 1 gezeigte System in der Seitenansicht;
- Fig. 3, 4, 5, 6: Belichtungszeitpunktdiagramme für das in der Fig. 1 gezeigte System;
- Fig. 7: ein Belichtungszeitpunktdiagramm für ein System zur Durchführung des erfindungsgemäßen Verfahrens in einer zweiten Ausführungsform;
- Fig. 8: ein Belichtungszeitpunktdiagramm für ein System wie in Fig. 7 jedoch mit einer anderen Berechnung der Belichtungszeitpunkte;
- Fig. 9: die Lage von Lichtschnitten auf einem Objekt nach den in den Fig. 7 und 8 gezeigten Verfahren und
- Fig. 10: die Bestimmung eines Abschaltkriteriums und eine Prozessvisualisierung für die in den Fig. 7 und 8 gezeigten Verfahren.

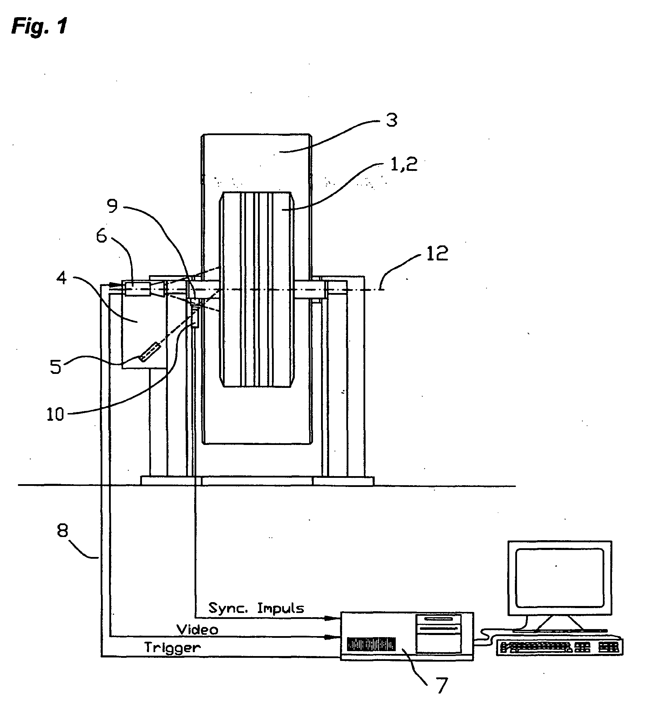

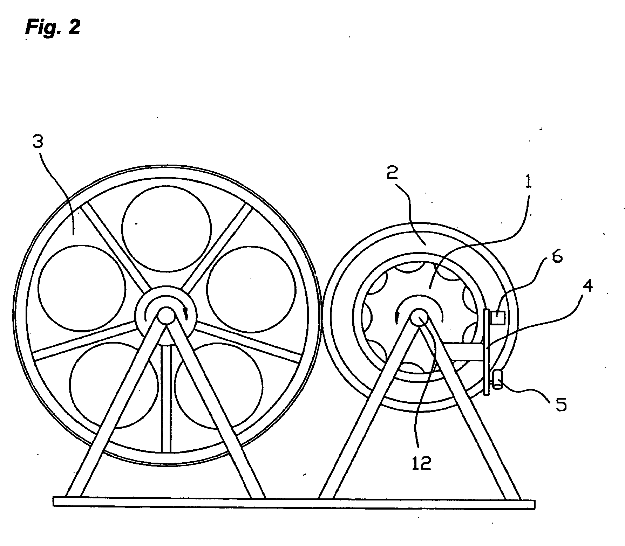

Die Fig. 1 und 2 zeigen den schematischen Aufbau eines Prüfsystems zur Durchführung des erfindungsgemäßen Verfahrens in der Vorder- und Seitenansicht. Auf einem Rollenprüfstand für Fahrzeugreifen wird ein Rad 1 gegen eine Antriebsrolle 3 gepresst. Die Antriebsrolle 3 wird von einem Elektromotor mit einstellbarer Drehzahl angetrieben. Das Rad 1 mit dem zu testenden Reifen 2 wird wiederum über die Antriebsrolle 3 angetrieben. Anpresskraft und Antriebsgeschwindigkeit sind einstellbar und ermöglichen es so, verschiedene Fahr- und Lastzustände zu simulieren. Auf einer Seite des Reifens 2 ist ein Lichtschnittsystem 4 angebracht, um eine Seitenwand des Reifens 2 während des Tests zu vermessen. Das Lichtschnittsystem 4 beinhaltet eine Kamera 6 und ein Linienlasermodul 5. Das Lichtschnittsystem 4 ist mit einem Rechnersystem 7 verbunden, das mit einer Bildverarbeitung zur Verarbeitung der von der Kamera 6 gelieferten Bilddaten ausgerüstet ist. Die Kamera 6 des Lichtschnittsystems 4 ist mit einem asynchron betätigbaren elektronischen Verschluss ausgerüstet, der vom Rechnersystem 7 mittels eines über eine Signalleitung 8 gesendeten Steuersignals geöffnet werden kann. An der Drehachse 12 des Rades ist 1 ein Impulsgeber 9 angebracht, der beim Vorbeistreichen an einem Sensor 10 einen Impuls auslöst. Pro Raddrehung wird ein Impuls ausgelöst. Die Impulse des Sensors 10 werden vom Rechnersystem 7 erfasst. Im praktischen Anwendungsfall würde ein weiteres Lichtschnittsystem 4 zur zeitgleichen Vermessung der zweiten Seitenwand des Reifens 2 angebracht werden.

Zunächst wird der Rollenprüfstand auf eine konstante Geschwindigkeit eingeregelt. An Hand der vom Sensor 10 gesendeten Impulse wird vom Rechnersystem 7 die Periodenlänge einer Raddrehung ermittelt und daraus eine geeignete Serie von Belichtungszeitpunkten berechnet. Danach wird von der Kamera 6 eine Serie von Bildern zu den berechneten Belichtungszeitpunkten aufgenommen, wobei die Belichtungszeitpunkte vom Rechnersystem 7 kontrolliert werden. Hierzu ist das Rechnersystem 7 mit einer echtzeitfähigen Zählerkarte ausgerüstet, die nach Ablauf programmierbarer Zeitintervalle über die Signalleitung 8 die Verschlussöffnung an der Kamera 6 auslöst. Jedes Zeitintervall ist so gewählt, dass der Zeitabstand zwischen zwei aufeinanderfolgenden Belichtungen größer ist als die Bildperiode der Kamera und somit eine Doppelbelichtung von Kamerabildern ausgeschlossen ist. Die Belichtungszeit wird von der Kamera 6 selbst kontrolliert und ist so kurz, dass die Aufnahmen vom Reifen 2 ausreichend scharf sind. Die Aufnahme der Bildserie wird beendet, sobald eine hinreichend große Anzahl von Lichtschnitten erfasst worden ist, die sich möglichst gleichmäßig über den Radumfang verteilen.

Bezüglich der pro Raddrehung maximal erfassbaren Anzahl von Lichtschnitten sind drei Fälle zu unterscheiden:
- 1. Fall:: Niedrige Geschwindigkeit, das heißt pro Raddrehung sind mehrere Aufnahmen am Umfang möglich.
- 2. Fall:: Mittlere Geschwindigkeit, das heißt pro Raddrehung ist eine Aufnahme am Umfang möglich.
- 3. Fall:: Hohe Geschwindigkeit, das heißt pro Raddrehung ist weniger als eine Aufnahme am Umfang möglich.

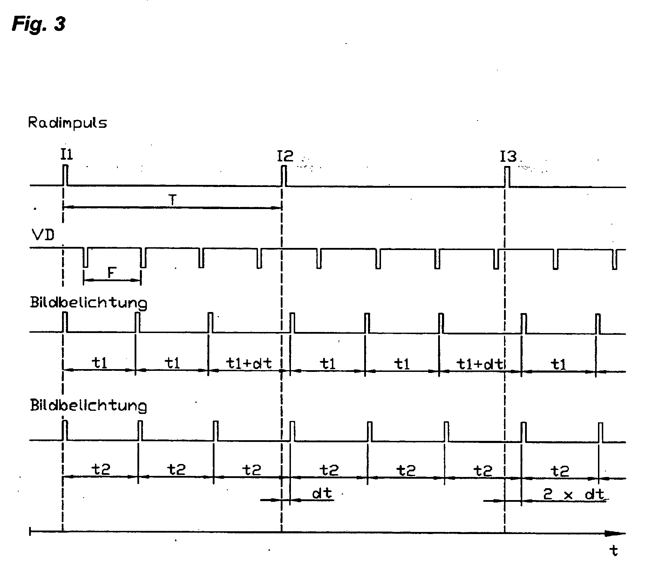

Die Fig. 3 bis 7 zeigen die für die Auswahl der Belichtungszeitpunkte maßgebenden Signale beziehungsweise Zustände. Die Kurven "Radimpuls", "VD" und "Bildbelichtung" haben im Einzelnen die folgende Bedeutung: Die Kurve "Radimpuls" zeigt den Synchronisationsimpuls der pro Raddrehung einmal gesendet wird. Die Kurve "VD" zeigt den Bildtakt der freilaufenden, das heißt kontinuierlich bildaufnehmenden Kamera 6. Der Abstand zwischen zwei Impulsen der VD-Kurve entspricht der Bildperiode F. Abhängig vom Kameratyp entspricht ein Bildtakt dabei entweder einem Voll- oder einem Halbbild. Die Kurve "Bildbelichtung" zeigt zu welchen Zeitpunkten eine Bildbelichtung bei der Kamera ausgelöst wird. Im gezeigten Fall wird die Bildbelichtung in der positiven Signalflanke ausgelöst.

Die Fig. 3 stellt ein Belichtungszeitpunktdiagramm für das oben geschilderte System für den 1. Fall dar, das heißt, wenn mehrere Belichtungen pro Raddrehung möglich sind. Dies ist dann gegeben, wenn die Periodenlänge T einer Raddrehung größer ist als die Zeit zwischen zwei Videobildern. Für die Belichtungszeitpunkte werden zwei Varianten gezeigt. Die erste (= obere) Variante verwendet Belichtungszeitpunkte, die mit einem Zeitabstand von jeweils t1 = T/3 innerhalb einer Raddrehung um 120° versetzt sind. Beim Übergang von einer Raddrehung zur nächsten wird ein zusätzliches Zeitintervall dt abgewartet, um zu erreichen, dass die drei Lichtschnitte, die innerhalb der nun folgenden Raddrehung aufgenommen werden, gegenüber denen der vorhergehenden Raddrehung am Radumfang versetzt sind. Das Zeitintervall dt kann beispielsweise mit dt = T/720 einem Drehwinkel von 0.5° entsprechen. Nach 240 Umdrehungen (= 120°/0.5°) ist dann das Rad mit 720 Lichtschnitten im Abstand von 0.5° erfasst.

Eine alternative Festlegung der Belichtungszeitpunkte ist in der darunterliegenden Bildbelichtungskurve gezeigt. Hierbei werden stets konstante Zeitabstände t2 zwischen zwei Belichtungen verwendet. Der Zeitabstand t2 wird beispielsweise so gewählt, dass er (T + dt)/3 entspricht. Entspricht dt wiederum einem Raddrehwinkel von 0.5°, so wird das Rad letztlich in 720 Umdrehungen (=120° / (0.5°/3)) mit 2160 Lichtschnitten im Abstand von 0.5°/3 erfasst werden.

Da bei dem in Fig. 1 gezeigten System zwischen Antriebsrolle 3 und Rad 1 kein festes Übersetzungsverhältnis vorliegt, kann die Drehgeschwindigkeit des Rades 1 unerwünschten Schwankungen sowie Schlupf unterliegen. Daher ist es vorteilhaft, den Zeitpunkt für die erste Belichtung innerhalb einer Periode auf den jeweils zuletzt erhaltenen Radimpuls zu beziehen. Der Zeitabstand für die jeweils erste Belichtung innerhalb einer Periode der Raddrehung ergibt sich dann zu n x dt wobei n die Anzahl der Raddrehungen bedeutet. Hierdurch wird die Bilderfassung einmal pro Umdrehung mit der Raddrehung synchronisiert.

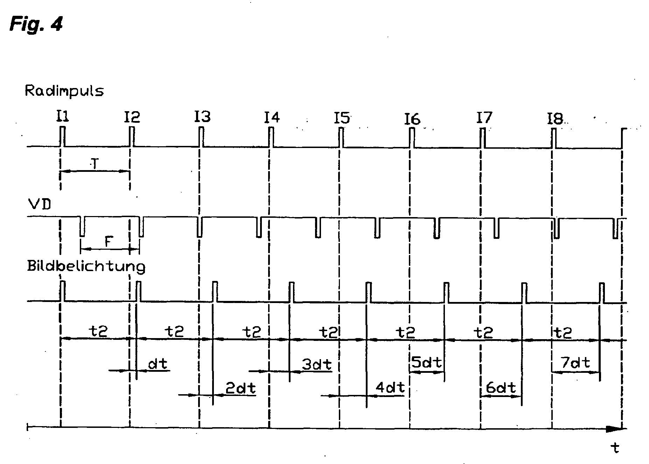

Die Fig. 4 zeigt ein Belichtungszeitpunktdiagramm für das System gemäß Fig. 1 für den 2. Fall, das heißt, wenn die Drehfrequenz des Rades 1 nur noch etwas kleiner ist als die Bildfrequenz der Kamera 6. Das Belichtungszeitpunktdiagramm zeigt, dass nur noch eine Aufnahme pro Raddrehung erfolgt. Der Zeitabstand t2 zwischen zwei Belichtungen ist so gewählt, dass er um dt größer ist als die Periode T.

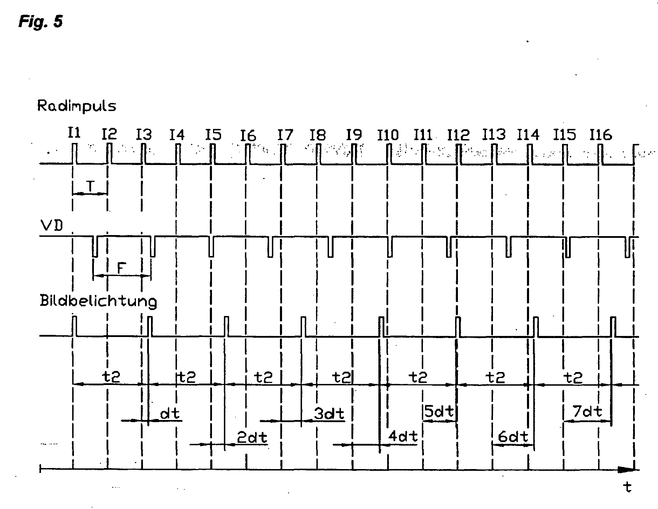

Das in Fig. 5 gezeigte Belichtungszeitpunktdiagramm zeigt die Verhältnisse bei Anwendung des Verfahrens für den 3. Fall, das heißt, wenn die Drehfrequenz des Rades 1 größer ist als die Bildfrequenz der Kamera 6. In diesem Fall kann nicht innerhalb jeder Raddrehung ein Bild aufgenommen werden. In der gezeigten Ausführungsform erfolgt eine Belichtung nur in jeder zweiten Raddrehung. Der Abstand zwischen zwei Belichtungen ergibt sich zu t2 = 2 x T + dt, wobei dt wiederum unter dem Gesichtspunkt gewählt wird, dass sich eine hinreichend gute Abtastrate nach Beendigung der Messung ergibt.

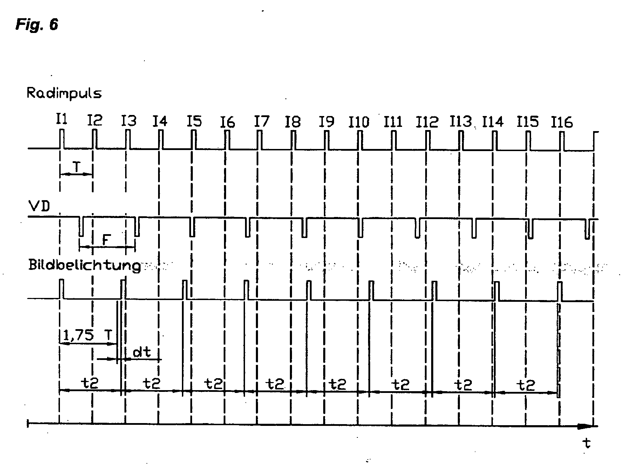

Die Fig. 6 zeigt dieselben Verhältnisse bezüglich Drehfrequenz des Rades 1 und Bildfrequenz der Kamera 6 wie die Fig. 5. Jedoch wurde der Abstand zwischen zwei Belichtungen gegenüber der Fig. 5 auf t2 = 1.75 x T + dt verkürzt. Dieser Zeitabstand ist einerseits immer noch etwas größer als die Bildperiode F zwischen zwei Kamerabildern, andererseits verkürzt sich die Messzeit gegenüber der Ausführungsform aus Fig. 5 um 12.5%.

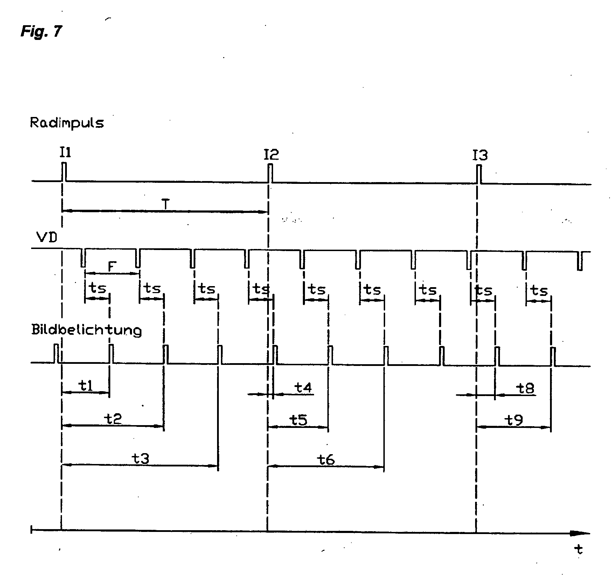

Die Fig. 7 zeigt das Belichtungszeitpunktdiagramm für ein System, das gegenüber dem System aus Fig. 1 derart modifiziert ist, dass keine externe, asynchrone Öffnung des Verschlusses der Kamera 6 stattfindet. Ferner wird das echtzeitfähige Rechenwerk dazu verwendet, die Zeitabstände zwischen Bildbelichtung und Radimpuls zu messen. Die Kamera 6 arbeitet jetzt mit kameraintern gesteuerter Bildbelichtung. Da das Objekt, das heißt der Reifen 2, bei Anwendung des erfindungsgemäßen Verfahrens in schneller Bewegung ist, ist die Belichtungszeit deutlich kürzer als die Bildperiode F gewählt. Eine solche Einstellung der Belichtungszeit ist bei praktisch jeder elektronischen Kamera 6 mittels eines internen elektronischen Shutters möglich. Der Verschluss wird von der freilaufenden Kamera 6 selbst jeweils nach einer bestimmten Zeit ts innerhalb einer Bildperiode F ausgelöst. Vom Rechnersystem 7 werden die Zeiten t1 bis t9 gemessen, wobei jeweils die Zeit gemessen wird, die nach Erhalt des letzten Radimpulses und der Öffnung des Verschlusses durch die Kamera 6 verstrichen ist. Die Zeiten t1 bis t9 sind proportional zur Drehstellung des Rades 1 und ermöglichen es so, die in den einzelnen Kameraaufnahmen erfassten Konturlinien bezüglich des Reifens 2 lagerichtig zueinander anzuordnen.

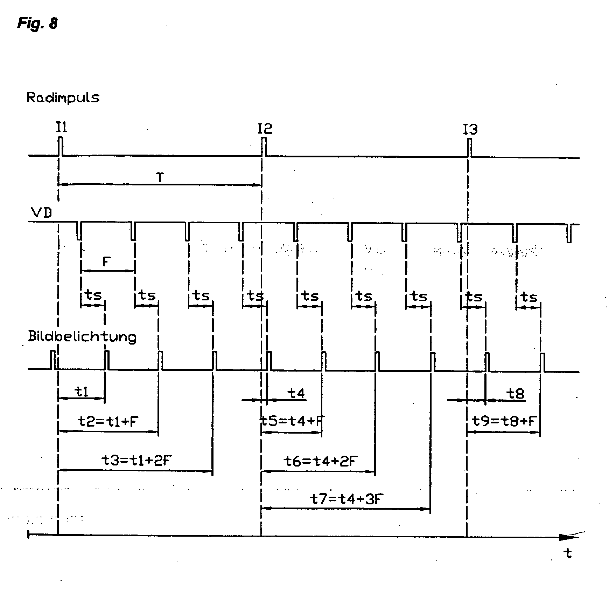

Die Fig. 8 zeigt das Belichtungszeitpunktdiagramm für ein System das analog zu dem aus Fig. 7 arbeitet, wobei jedoch die Berechnung der Belichtungszeitpunkte derart modifiziert ist, dass eine besonders einfache und kostengünstige technische Realisierung möglich ist. Dabei wird innerhalb einer Umdrehung des Rades 1 lediglich die Zeit t1, t4, t8 vom Radimpuls bis zur ersten Bildbelichtung, zum Beispiel mit einer Zählerkarte, gemessen. Die Zeitpunkte der innerhalb der Raddrehung darauf folgenden Bildbelichtungen werden dann jeweils durch Addition der Anzahl der Bildtakte, die zwischen dem ersten und dem aktuellen Bild liegen, multipliziert mit der konstanten Bildperiode F und dem Zeitwert des ersten Bildes berechnet.

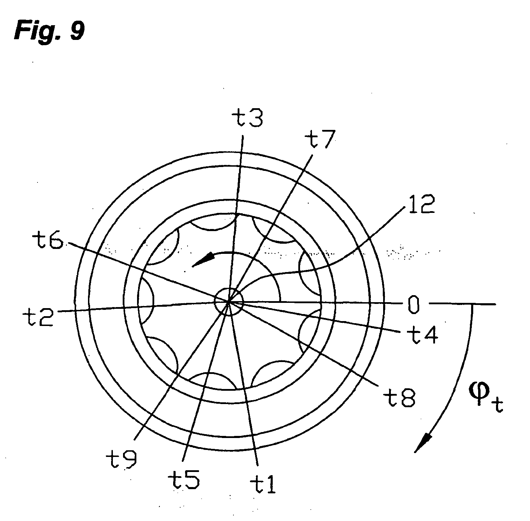

Die Fig. 9 zeigt welche Drehstellungen des Rades aus der Fig. 2 den Zeiten t1 bis t9 aus der Fig. 7 beziehungsweise der Fig. 8 entsprechen. Ferner entspricht die eingezeichnete Drehstellung 0 der des in den Fig. 7 und 8 gezeigten Radimpulses I1.

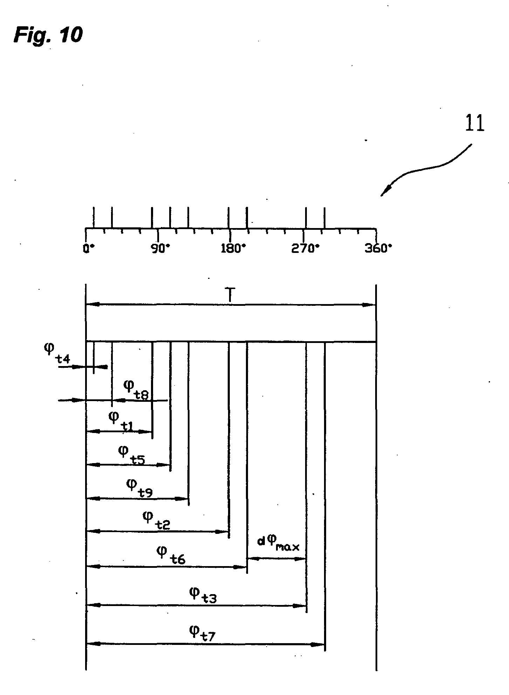

Bei einer Vorgehensweise gemäß den in Fig. 7 und 8 gezeigten Verfahren ist die Position der Einzelmessungen am Radumfang nicht notwendigerweise vorherbestimmt und der Drehwinkelabstand zweier benachbarter Messungen nicht konstant. Die Fig. 10 veranschaulicht, wie in diesen Fällen die Messung kontrolliert durchgeführt wird. Bei der laufenden Messung werden die den ermittelten Bildbelichtungszeiten t1 bis t9 entsprechenden Drehwinkel ϕₜ₁ bis ϕₜ₉ fortlaufend der Größe nach sortiert und anschließend der Winkelabstand dϕ zwischen jeweils benachbarten Drehwinkeln ϕₜ berechnet. Mit fortschreitender Messdauer werden diese Winkelabstände dϕ immer kleiner, da ständig weitere Einzelmessungen und damit Zwischenstellungen hinzukommen. Die Messung wird vorteilhafterweise so lange fortgeführt, bis der maximal vorhandene Winkelabstand dϕₘₐₓ einen vorgegebenen Schwellwert unterschreitet. Zur Visualisierung des Messvorgangs werden mit Vorteil die erfassten Drehstellungen des Rades 1 in einer Gradskala 11 eingetragen und angezeigt. Diese Art der Prozessvisualisierung kann aber auch bei allen anderen Ausführungsvarianten der Erfindung angewendet werden.

### Bezugszeichenliste

- 1: Rad
- 2: Reifen
- 3: Antriebswelle
- 4: Lichtschnittsystem
- 5: Linienlasermodul
- 6: Kamera
- 7: Rechnersystem
- 8: Signalleitung
- 9: Impulsgeber
- 10: Sensor
- 11: Gradskala
- 12: Drehachse

- F: Bildperiode
- I: Radimpuls
- T: Periodenlänge

- t: Zeitabstand, Belichtungszeitpunkt
- dt: Zeitintervall
- n: Anzahl der Raddrehungen
- ts: Auslösezeit

- ϕ: Drehwinkel
- dϕ: Winkelabstand

## Patentansprüche

1. Verfahren zur räumlichen Vermessung sich schnell bewegender Objekte (2), insbesondere von Felgen oder Reifen, bei dem die Oberflächenkontur eines Objekts (2) ermittelt wird, indem das Objekt (2) mit einem Lichtschnitt- oder Streifenprojektionsverfahren dreidimensional vermessen wird, **gekennzeichnet durch** folgende Verfahrensschritte:
das Objekt (2) wird **durch** eine Rotation um eine zur Messvorrichtung (4) ortsfeste Achse in mehreren Durchgängen an einer Messvorrichtung (4) vorbeibewegt, wobei das Objekt (2) gegenüber der Messvorrichtung (4) eine periodische Drehbewegung oder eine periodische Schwingbewegung ausführt;
von der Messvorrichtung (4) werden in den einzelnen Durchgängen jeweils Teilbereiche der Objektoberfläche erfasst, die gegenüber den in den anderen Durchgängen erfassten Teilbereichen bezüglich des Objektes (2) räumlich versetzt sind;
dieser Versatz wird **dadurch** erzeugt, dass die Objektoberfläche von der Messvorrichtung (4) an unterschiedlichen Momentanpositionen des Objektes (2) aufgenommen wird, wobei ein Referenzsignal erzeugt wird, das wenigstens einmal pro Periode einen Synchronisationsimpuls (I1 bis I16) sendet, wobei **durch** die gesendeten Synchronisationsimpulse (I1 bis I16) die Bildbelichtung einer Kamera (6) der Messvorrichtung (4) mit der Objektbewegung synchronisiert wird.

2. Verfahren nach Anspruch 1, **dadurch gekennzeichnet, dass** die bei der Erfassung der Teilbereiche der Objektoberfläche jeweils vorliegende Momentanposition des Objektes (2) gegenüber der Messvorrichtung (4) registriert wird, die Konturdaten der erfassten Teilbereiche mittels der registrierten Momentanpositionen in ein gemeinsames Objektkoordinatensystem transformiert werden und aus den transformierten Konturdaten ein Oberflächenmodell des Objektes (2) erzeugt wird.

3. Verfahren nach Anspruch 2, **dadurch gekennzeichnet, dass** die Momentanpositionen des Objektes (2) gegenüber der Messvorrichtung (4) jeweils durch eine Messung der vom Objekt (2) gegenüber der Messvorrichtung (4) zurückgelegten Wegstrecke oder des vom Objekt (2) gegenüber der Messvorrichtung (4) zurückgelegten Drehwinkels (ϕ) bestimmt werden.

4. Verfahren nach Anspruch 1, **dadurch gekennzeichnet, dass** durch das Referenzsignal die aktuell vorliegende Periodenlänge (T) der Dreh- oder Schwingbewegung ermittelt wird.

5. Verfahren nach Anspruch 1 oder 4, **dadurch gekennzeichnet, dass** eine Messung oder eine Berechnung von Belichtungszeitpunkten (t1 bis t9) auf den jeweils letzten vor oder ersten nach der betreffenden Bildbelichtung erhaltenen Synchronisationsimpuls (I1 bis I16) bezogen wird.

6. Verfahren nach einem der Ansprüche 1 bis 5, **dadurch gekennzeichnet, dass** für eine Kamera (6) der Messvorrichtung (4) eine konstante Bildbelichtungsfrequenz gewählt wird, die in einem nicht ganzzähligen Verhältnis zur Bewegungsfrequenz des Objektes (2) steht.

7. Verfahren nach Anspruch 6, **dadurch gekennzeichnet, dass** bei der Erfassung der Teilbereiche der Objektoberfläche durch die Kamera (6) der Messvorrichtung (4) jeweils der Zeitabstand (t1 bis t9) zwischen dem Erfassungszeitpunkt und dem Zeitpunkt, zu dem das Objekt (2) eine Referenzposition erreicht hat, gemessen und registriert wird, wobei die Konturdaten von den erfassten Teilbereichen anhand der registrierten Zeitabstände (t1 bis t9) in ein gemeinsames Objektkoordinatensystem transformiert werden.

8. Verfahren nach Anspruch 7, **dadurch gekennzeichnet, dass** die Zeitabstände (t1 bis t9) mittels eines echtzeitfähigen Rechenwerks gemessen werden.

9. Verfahren nach Anspruch 7 oder 8, **dadurch gekennzeichnet, dass** zur Messung der Zeitabstände (t1 bis t9) die Anzahl der Bildtakte und die Bildfrequenz beziehungsweise die Bildperiode der Kamera (6) verwendet wird.

10. Verfahren nach einem der Ansprüche 6 bis 9, **dadurch gekennzeichnet, dass** bei der Durchführung der Messung fortlaufend jeweils die Abstandswerte zwischen räumlich benachbarten Teilbereichen berechnet werden und die Messung beendet wird, sobald der Maximalwert aller momentan vorliegenden Abstandswerte einen vorgegebenen Schwellwert unterschreitet.

11. Verfahren nach einem der Ansprüche 1 bis 5, **dadurch gekennzeichnet, dass** zur Erfassung der Teilbereiche der Objektoberfläche an unterschiedlichen Momentanpositionen des Objektes (2) die Kamera (6) der Messvorrichtung (4) jeweils zeitgesteuert zu einem vorherberechneten Belichtungszeitpunkt (t1 bis t9) belichtet wird.

12. Verfahren nach Anspruch 11, **dadurch gekennzeichnet, dass** bei der Vorherberechnung der Belichtungszeitpunkte (t1 bis t9) der zeitliche Abstand zwischen zwei aufeinander folgenden Belichtungszeitpunkten (t1 bis t9) jeweils größer gewählt wird, als die Bildperiode (T) eines Kamerabildes oder Kamerahalbbildes.

13. Verfahren nach Anspruch 11 oder 12, **dadurch gekennzeichnet, dass** zur zeitgesteuerten Belichtung der Kamera (6) zu vorherberechneten Belichtungszeitpunkten (t1 bis t9) ein echtzeitfähiges Rechenwerk verwendet wird.

14. Verfahren nach einem der Ansprüche 11 bis 13, **dadurch gekennzeichnet, dass** die Belichtung der Kamera (6) durch eine externe Triggerung der Kamera (6) oder eine externe Auslösung eines mechanischen oder elektronischen Kameraverschlusses gesteuert wird.

15. Verfahren nach einem der Ansprüche 11 bis 13, **dadurch gekennzeichnet, dass** die Belichtung der Kamera (6) über Einschaltzeitpunkt und Einschaltdauer einer Lichtquelle (5) der Messvorrichtung (4) festgelegt wird.

16. Verfahren nach einem der Ansprüche 1 bis 15, **dadurch gekennzeichnet, dass** zur Prozessvisualisierung eine Grafik angezeigt wird, welche die Position der einzelnen erfassten Teilbereiche auf einer stilisierten Darstellung des Objekts (2) oder in einer die Bewegungsperiode des Objektes (2) darstellenden Skala (11) angibt, wobei vorzugsweise die Grafik während der Messung fortlaufend aktualisiert wird.

## Claims

1. A method of three-dimensionally scanning fast-moving objects (2), in particular wheels and tires, wherein the surface contour of an object (2) is mapped by three-dimensionally scanning the object (2) with a light slice or fringe projection technique
**characterized by** the following steps:
repeatedly moving the object (2) past a scanner (4) through a rotation around an axis which is fixed in relation to the scanner (4), wherein the object (2) performs a periodical rotation movement or a periodical oscillating movement in relation to the scanner (4);
scanning portions of the object surface spatially offset relative to the portions scanned in the other passings of the object (2); and
generating said offset by the object surface being scanned by the scanner (4) at different momentary positions of the object (2), generating a reference signal emitting a synchronizing pulse (I₁ to I₁₆) at least once per period, the emitted synchronizing pulses (I₁ to I₁₆) synchronizing the imaging of a camera (6) of the scanner (4) to the motion of the object.

2. The method according to claim 1,
**characterized by** mapping each momentary position of the object (2) in scanning the portions of the object surface relative to the scanner (4), transforming the contour data of the scanned portions by means of the mapped momentary positions into a common object coordinate system and generating a surface model of the object (2) from the transformed contour data.

3. The method according to claim 2,
**characterized by** determining the momentary positions of the object (2) relative to the scanner (4) each time by sensing the distance covered by the object (2) relative to the scanner (4) or the angle of rotation (ϕ) covered by the object (2) relative to the scanner (4).

4. The method according of claim 1,
**characterized in that** the instant period length (T) of the rotational or oscillatory motion is obtained by the reference signal.

5. The method according to claim 1 or 4,
**characterized in that** sensing or computing imaging instants (t₁ to t₉) is referenced to the synchronizing pulses (I₁ to I₁₆) last received before or firstly after the corresponding imaging.

6. The method according to any one of the claims 1 to 5,
**characterized in that** for a camera (6) of the scanner (4) a constant imaging frequency is selected relative to the motional frequency of the object (2) in a non-integer ratio.

7. The method according to claim 6,
**characterized in that** in scanning the portions of the object surface by the camera (6) of the scanner (4) the time spacing (t₁ to t₉) between the instant of scanning and the instant at which the object (2) has attained the reference position is sensed and mapped, the contour data of the scanned portions being transformed by way of the mapped time spacing (t₁ to t₉) into a common object coordinate system.

8. The method according to claim 7,
**characterized in that** the time spacings (t₁ to t₉) are measured by means of a real-time compatible microprocesor.

9. The method according to claim 7 or 8,
**characterized in that** to measure the time spacing (t₁ to t₉) use is made of the image timing and image frequency or respectively the image period of the camera (6).

10. The method according to any one of the claims 6 to 9,
**characterized in that** in performing scanning, the spacing values between spatially adjacent portions are computed and the scanning discontinued as soon as the maximum value of all instant spacing values drops below a predefined threshold value.

11. The method according to any one of the claims 1 to 5,
**characterized in that** to scan the portions of the object surface at the various momentary positions of the object (2) the camera (6) of the scanner (4) is exposed controlled in time to a precomputed imaging instant (t₁ to t₉).

12. The method according to claim 11,
**characterized in that** in precomputing the imaging instants (t₁ to t₉) each time spacing between two imaging instants (t₁ to t₉) in sequence is selected larger than the image period (T) of a camera frame or camera field.

13. The method according to claim 11 or 12,
**characterized in that** a real-time compatible microprocessor is used for time-controlled imaging of the camera (6) at predefined imaging instants (t₁ to t₉).

14. The method according to any one of the claims 11 to 13,
**characterized in that** that the imaging of the camera (6) is controlled by an external triggering of the camera (6) or an external release of a mechanical or electronic camera shutter.

15. The method according to any one of the claims 11 to 13
**characterized in that** the imaging of the camera (6) is defined by the ON instant/duration of an illuminator (5) of the scanner (4).

16. The method according to any one of the claims 1 to 15,
**characterized in that** to visualize the process a graphics display is used showing the position of the individual portions scanned on a stylized representation of the object (2) or on a scale representing the momentary position of the (2), the graphics display preferably being continually updated during scanning.

## Revendications

1. Procédé pour la mesure spatiale d'objets (2) en déplacement rapide, en particulier de jantes ou de pneumatiques, dans lequel on détermine le contour de surface d'un objet (2), en procédant à une mesure tridimensionnelle de l'objet (2) avec un procédé de projection de lumière linéaire ou en bande, **caractérisé par** les étapes de procédé suivantes :
l'objet (2) est déplacé devant un dispositif de mesure (4) en plusieurs passes par une rotation autour d'un axe stationnaire par rapport au dispositif de mesure (4), l'objet (2) exécutant un mouvement de rotation périodique ou un mouvement d'oscillation périodique par rapport au dispositif de mesure (4) ;
des zones partielles respectives de la surface de l'objet sont saisies par le dispositif de mesure (4) lors des passes individuelles, ces zones étant décalées dans l'espace par référence à l'objet (2) par rapport aux zones partielles saisies dans les autres passes ;
ce décalage est produit en enregistrant la surface de l'objet par le dispositif de mesure (4) à différentes positions momentanées de l'objet (2) engendrant un signal de référence qui émet au moins une fois par période une impulsion de synchronisation (I₁ à I₁₆), et la prise d'image d'une caméra (6) du dispositif de mesure (4) est synchronisée avec le mouvement de l'objet au moyen des impulsions de synchronisation (I₁ à I₁₆) émises.

2. Procédé selon la revendication 1,
**caractérisé en ce que** la position momentanée de l'objet (2) vis-à-vis du dispositif de mesure (4) qui se présente respectivement lors de la saisie des zones partielles de la surface de l'objet est enregistrée, les données de contour des zones partielles saisies sont transformées dans un système de coordonnées commun attaché à l'objet au moyen des positions momentanées enregistrées, et un modèle de surface de l'objet (2) est engendré à partir des données de contour transformées.

3. Procédé selon la revendication 2, **caractérisée en ce que** les positions momentanées de l'objet (2) vis-à-vis du dispositif de mesure (4) sont déterminées respectivement par une mesure du trajet parcouru par l'objet (2) vis-à-vis du dispositif de mesure (4) ou par l'angle de rotation (ϕ) parcouru par l'objet (2) vis-à-vis du dispositif de mesure (4).

4. Procédé selon la revendication 1, **caractérisé en ce que** la longueur de période (T) qui se présente actuellement, du mouvement de rotation ou d'oscillation, est déterminée par le signal de référence.

5. Procédé selon la revendication 1 ou 4, **caractérisé en ce qu'**une mesure ou un calcul des instants d'éclairage (t₁ à t₉) est fait(e) en référence à la dernière impulsion de synchronisation respective (I₁ à I₁₆) reçue avant ou la première impulsion après la prise d'image concernée.

6. Procédé selon l'une des revendications 1 à 5, **caractérisé en ce que** l'on choisit pour une caméra (6) du dispositif de mesure (4) une fréquence de prise d'image constante, qui n'est pas dans un rapport entier par rapport à la fréquence de déplacement de l'objet (2).

7. Procédé selon la revendication 6, **caractérisé en ce que** lors de la saisie des zones partielles de la surface de l'objet par la caméra (6) du dispositif de mesure (4), on mesure respectivement l'écart temporel (t₁ à t₉) entre l'instant de saisie et l'instant auquel l'objet (2) a atteint une position de référence, et on l'enregistre, les données de contour des zones partielles saisies étant transformées dans un système de coordonnées commun attaché à l'objet au moyen des écarts temporels (t₁ à t₉) enregistrés.

8. Procédé selon la revendication 7, **caractérisé en ce que** les écarts temporels (t₁ à t₉) sont mesurés au moyen d'un calculateur capable de travailler en temps réel.

9. Procédé selon la revendication 7 ou 8, **caractérisé en ce que** pour la mesure des écarts temporels (t₁ à t₉) on utilise le nombre des cycles d'images et la fréquence des images, respectivement la période des images de la caméra (6).

10. Procédé selon l'une des revendications 6 à 9, **caractérisé en ce que** lors de l'exécution de la mesure, on calcule en permanence les valeurs d'écart respectives entre des zones partielles voisines dans l'espace et on termine la mesure dès que la valeur maximum de toutes les valeurs d'écart qui se présentent momentanément passe au-dessous d'une valeur seuil prédéterminée.

11. Procédé selon l'une des revendications 1 à 5, **caractérisé en ce que**, pour saisir les zones partielles de la surface de l'objet à différentes positions momentanées de l'objet (2), la caméra (6) du dispositif de mesure (4) et déclenchée respectivement sous une commande temporelle à un instant de prise (t₁ à t₉) préalablement calculé.

12. Procédé selon la revendication 11, **caractérisé en ce que** lors de calcul préalable des instants de prise (t₁ à t₉), on choisit l'écart temporel entre deux instants d'éclairage mutuellement successifs (t₁ à t₉) respectivement supérieur à la période d'image (T) d'une image ou d'une demi-image de la caméra.

13. Procédé selon la revendication 11 ou 12, **caractérisé en ce que** pour le déclenchement de la caméra (6) à commande temporelle à des instants de prise (t₁ à t₉) préalablement calculés, on utilise un calculateur capable de travailler en temps réel.

14. Procédé selon l'une des revendications 11 à 13, **caractérisé en ce que** la prise de vue de la caméra (6) est commandée par un déclenchement externe de la caméra (6) ou par un déclenchement externe d'un obturateur mécanique ou électronique de la caméra.

15. Procédé selon l'une des revendications 11 à 13, **caractérisé en ce que** la prise de vue de la caméra (6) est déterminée via l'instant et la durée de mise en service d'une source lumineuse (5) du dispositif de mesure (4).

16. Procédé selon l'une des revendications 1 à 15, **caractérisé en ce que**, pour la visualisation du processus, on affiche un graphisme qui indique la position des zones partielles saisies individuelles sur une représentation stylisée de l'objet (2) ou dans une échelle (11) qui représente la période de déplacement de l'objet (2), et le graphisme est de préférence actualisé en permanence pendant la mesure.
